# EUROPEAN PATENT SPECIFICATION

(11) **EP 0 733 812 B1**
(45) Date of publication and mention of the grant of the patent: **31.05.2000**
(21) Application number: 96300367.8
(22) Date of filing: 18.01.1996
(51) Int. Cl.: F16B 13/08

(54) **Blind fastener device**
Blindbefestigungsvorrichtung
Dispositif de fixation en aveugle

(30) Priority: 20.03.1995 GB 9505554
(43) Date of publication of application: 25.09.1996
(73) Proprietor: GLYNWED INTERNATIONAL PLC, Sheldon, Birmingham B26 3AZ (GB)
(72) Inventor: Gill, Neil, Bradford BD7 2NF (GB); Klippel, Simon, Bradford BD7 2NF (GB); Kirk, Andrew, Bradford BD7 2NF (GB)
(74) Representative: Orr, William McLean

(56) References cited:
- US-A- 1 516 242
- US-A- 2 439 364
- US-A- 2 504 325
- US-A- 5 139 377

## Description

This invention relates to a blind fastener device which can be taken through a mounting hole in a building component, such as a wall or a floor / ceiling slab, and which device has an anchor which is adjustable between an insertion mode of minimum lateral extent suitable for passing through the hole from one side thereof, and a deployed anchor mode of greater lateral extent when it has reached the other side (the blind side) of the hole.

Blind fasteners are used to locate an anchor at the blind side of a hole i.e. the side of a hole to which access cannot readily be achieved e.g. the inner face of a partition wall, or the upper side of a ceiling panel, and are constructed so that the anchor can be adjusted, or manipulated, between an insertion position of minimum width (relative to the diameter of the hole through which it is to be taken), and the deployed position at the blind side of the hole in which its lateral extent is greater than the diameter of the hole so that it overlies the entrance to the hole at the blind side, and serves as an anchor which can be engaged by a threaded rod or bolt taken through the hole. The rod can then be used to fix a component at the access side of the hole. The anchor is able to spread the load caused by tightening of the rod, and forms a secure anchoring for the fixing device.

Blind fasteners of this type can be used to suspend objects from a ceiling e.g. pipe hangers, or support hooks for electrical conduits, or to secure a bracket to a side wall.

In one known arrangement, for use as an overhead fixing device, the anchor comprises an unsymmetrical toggle having a hub formed with an internally threaded socket to receive a bolt or threaded suspension rod, and having diametrically opposed legs of unequal length to form a short nose portion and a longer tail portion. The legs extend outwardly of the central hub, and in addition fixing holes are formed in the outer wall of the hub so as detachably to receive the inturned ends of a U-shaped holder clip. The clip can be used to present the toggle to the hole in a ceiling, and to push the toggle upwardly through the hole, and with the toggle taking up an insertion mode in which it is pivoted to a position of minimum lateral extent by reason of the weight of the longer tail causing the toggle to extend generally parallel to the axis of the holder, i.e. generally vertically when the holder and the toggle are presented to the hole in the ceiling.

Once the toggle has passed completely through the hole to the upper blind side thereof, the holder is then manipulated so that the toggle pivots to a generally horizontal anchor position in which it overlies the entrance to the hole at the blind side thereof. The holder is then usually moved slightly out of the vertical to allow a bolt or threaded rod to gain access to the threaded socket, and to make threaded engagement therewith, and once the rod is firmly engaged with the toggle, the holder is then disengaged from the hub and is usually discarded.

US-A-5139377, US-A-1516242, US-A-2439364 and US-A-2504325 disclose various anchoring type fasteners. The features of the pre-characterising part of claim 1 are known from US-A-2 504 325 or US-A-1 516 242.

The holder is therefore used once only, and then disposed of as scrap, which is undesirable and an uneconomic use of this resource.

The invention therefore seeks to provide a blind fastener combination of an anchor and a coupling member, in which the coupling member can be used to perform a dual function, namely a) to assist the initial presentation of the anchor to the hole and then to guide the anchor through the hole, and then subsequently to assist deployment of the anchor to the deployed (anchoring) position; and b) also to form part of a clamping assembly to fix any desired components to the fixing device e.g. to suspend a pipe hanger from the ceiling via the fixing device.

According to the invention there is provided a blind fastener device (10) which comprises an anchor (11) and an elongate coupling member (12) which is adjustably connected to said anchor (11), said device being capable of being presented to an access side (14a) of a through-hole (16) in a building component (14) and for the anchor (11) to be moved through the hole (16) to a blind side (14b) thereof and for the device (10) to be adjusted when the anchor (11) has reached the blind side so that the anchor takes-up an anchoring position, in which:
(1) the anchor (11) and the coupling member (12) are relatively adjustable between an insertion mode in which the anchor presents a profile of minimum lateral extent relative to the coupling member so that the coupling member can present the anchor to the through-hole (16) from the access side (14a) thereof and can be used to pass the anchor through the hole to the blind side (14b) thereof, and an anchor position in which the anchor (11) takes-up a profile of maximum lateral extent relative to the coupling member (12) so as to overlie the entrance to the through-hole (16) at the blind side (14b);
(2) the coupling member (12) is held captive by the anchor (11), when they are relatively adjusted to the anchor position, so as to extend substantially perpendicular to the anchor and to form a fixing element to which a device can be fastened, wherein the coupling member comprises an elongated rod or bar (12) having a threaded portion (19) to which a device can be fastened, and a head or nut (13) to hold the rod or bar (12) captive with the anchor (11);
(3) the anchor (11) comprises a generally channel shaped member in which the elongate coupling member (12) can be received in the insertion mode of the fastener device in which the anchor (11) has a first recess (20) in which said head (13) is received in the insertion mode and with the anchor (11) extending generally parallel to the axis of the rod, and a second recess (21) which receives said head (13) after relative adjustment of the anchor (11) to the anchor mode, in which said first and second recesses (20, 21) are formed in the side walls of the channel shaped member (11);
(4) the adjustment movement of said anchor (11) and said coupling member (12) between the insertion mode and the anchor mode comprises a combined pivoting and rocking movement;
characterised in that :
(5) a pivot point (23) is provided in the side walls of the channel shaped member (11) to assist the combined pivoting / rocking movement and said pivot point is formed by a pair of opposed inwardly deformed pips (23) disposed adjacent the second recess.

Thus, a blind fastener device according to the invention has a unique combination of anchor plus coupling member, in which the coupling member can perform the dual function of a) being used to present the anchor to the hole and then to pass the anchor through the hole, followed by relative adjustment to the anchor mode, and b) also forms a permanent part of the fixing device and to which a device, such as a pipe hanger, can be fastened.

The fastening device of the invention may thus be used to suspend an object from a ceiling, or to attach e.g. a bracket to a vertical wall.

The coupling member comprises an elongated rod or bar, having a threaded portion to which a device can be fastened. In a particular simple arrangement, the coupling member comprises a threaded rod having a head e.g. a nut, at one end which serves to hold the rod captive in a recess defined in the anchor.

The anchor has a first recess in which the head is received, in the insertion mode, and with the anchor extending generally parallel to the axis of the rod, and a second recess which receives the head after relative adjustment to the anchor mode.

The anchor comprises a generally channel shaped member in which the rod can be received, in the insertion mode, preferably having the first and second recesses formed in the side walls of the member.

The first recess receives the head and prevents relative axial movement between the anchor and the rod in the insertion mode (to facilitate introduction and passage of the anchor through the hole), and the second recess prevents relative perpendicular movement between the head and the anchor so that a device can be clamped to the fastener device.

Preferably, a cam or guide surface is formed in the wall of the channel, and runs between the first and second recesses to guide relative adjustment movement between the two positions.

The adjustment movement is a type of combined pivoting and rocking movement, and a pivot point is provided in the channel to assist the pivoting / rocking movement of the rod.

To provide the pivot point, the side walls of the channel of the anchor are inwardly deformed to form the pivot point by forming a pair of opposed inwardly deformed pips.

The coupling member comprises a simple threaded rod, of the type used to suspend objects from ceilings, and the head may comprise a simple nut threaded onto one end of the rod.

The anchor may be fabricated from metal plate, deformed to form a channel shape, which provides substantial strength to withstand applied loads when it has been adjusted to the anchor position.

A preferred embodiment of blind fastener device according to the invention will now be described in detail, by way of example only, with reference to the accompanying drawings in which:
Figure 1 is an exploded view of the components of the blind fastener device, comprising an anchor and an elongate coupling member co-operable therewith;
Figure 2 shows the coupling member and the anchor assembled, and occupying a relative position of adjustment between an insertion mode, and an anchor mode;
Figure 3 shows the coupling member and the anchor adjusted to the insertion mode of minimum lateral extent;
Figure 4 shows the first stage in forming a suspension point in a ceiling or floor slab, to which the fastener device is to be fixed;
Figure 5 shows the blind fastener device of the invention, in the insertion mode of Figure 3, being presented to a through-hole formed in the ceiling slab by the steps shown in Figure 4;
Figure 6 shows the relative adjustment which takes place, once the anchor has reached the blind side of the through-hole, as it is adjusted to take up the anchor mode; and

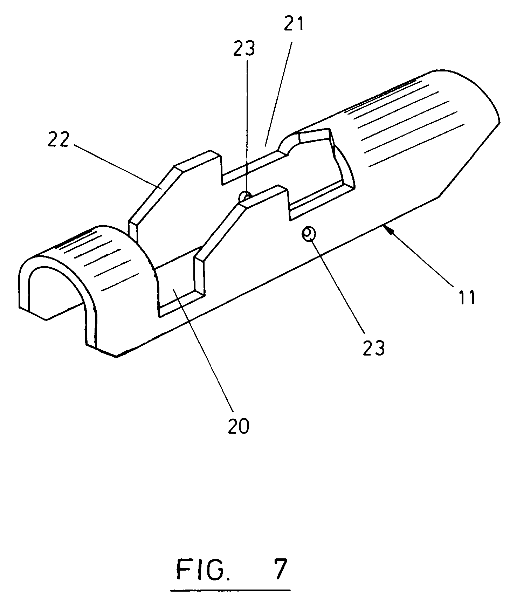

Figure 7 is an isometric view of the anchor member which is formed from metal plate shaped into a generally channel shaped member.

Referring now to the drawings, a blind fastener device according to the invention is designated generally by reference 10 and comprises a generally channel shaped anchor member 11 and an elongate coupling member in the form of a threaded rod 12. The rod 12 may be of a type used to suspend pipe hangers from a ceiling, and it has a head in the form of a removable nut 13, and which is capable of being held captive in either one of two recesses formed in the wall of the channel shaped anchor member 11.

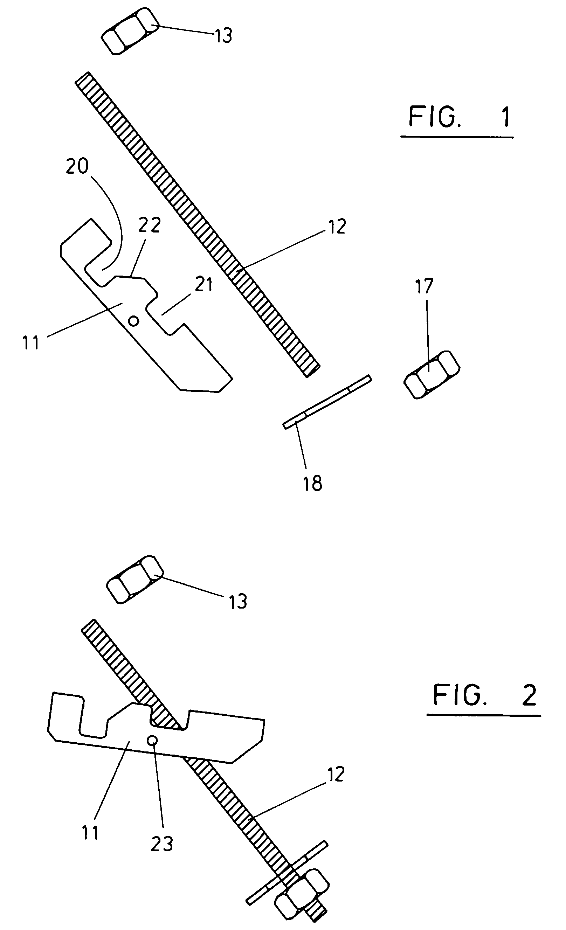

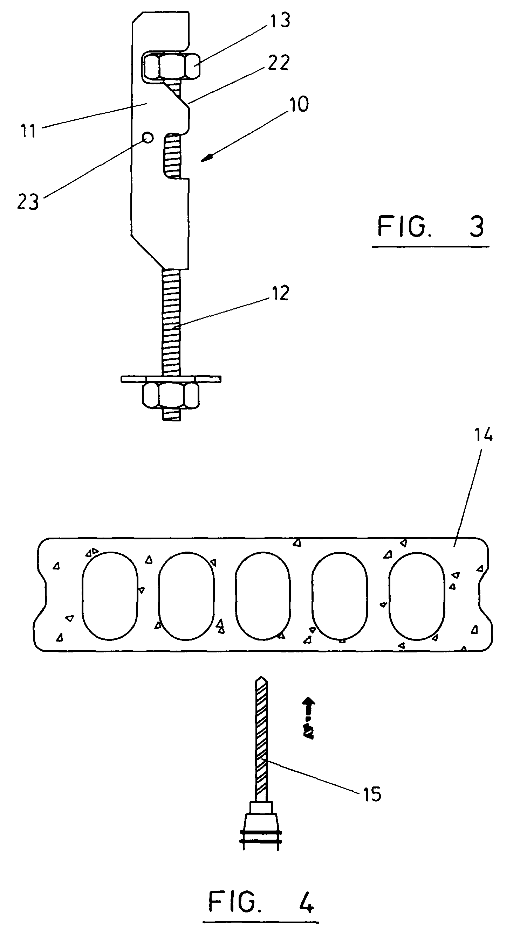

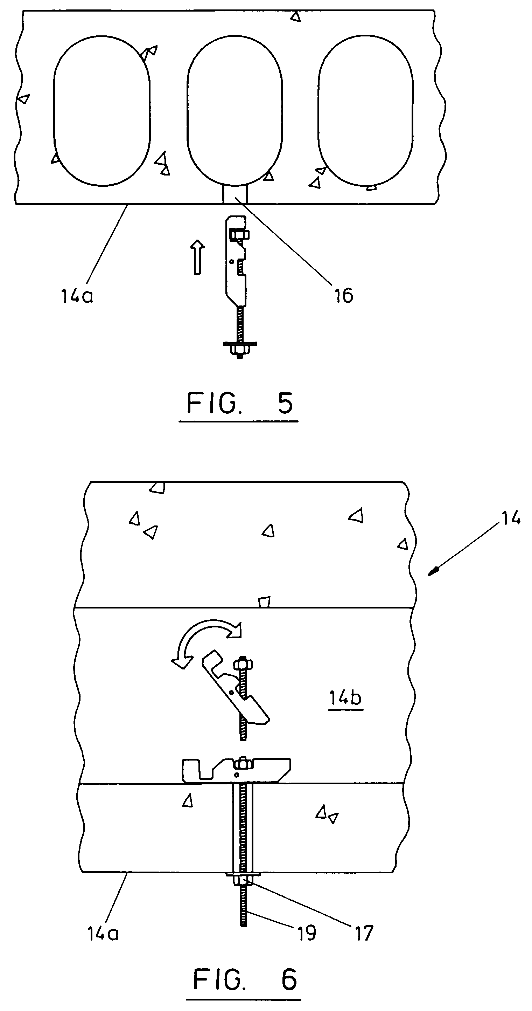

A ceiling slab 14 is shown in Figure 4, and a drill 15 is used to form a vertical hole in the underside 14a of the ceiling slab 14, and this through-hole, as shown by reference 16 in Figure 5, is of sufficiently large diameter to allow the blind fastener device 10 to pass upwardly through it, when the device takes up the insertion mode of minimum lateral extent, as shown in Figure 3. After the anchor 11 has passed upwardly through the hole 16, to the blind side 14b thereof, relative adjustment then takes place by suitable manipulation of the coupling rod 12, so that the channel shaped anchor 11 takes up the perpendicularly extending anchor position shown in Figure 6. A device can then be securely fixed to the blind fastener device 10 by being coupled with the downwardly projecting threaded end of coupling rod 12. The blind fastener device may be securely anchored in position by use of a further nut 17 and washer 18, as shown in Figures 1 and 6, and leaving a downwardly projecting end 19 of the threaded rod to which a fixture, such as a pipe hanger, can be fastened.

It will be evident, therefore, that the coupling member 12 performs the dual function of a) being used to present the channel shaped anchor 11 through the through-hole 16 and then passing the anchor from the access side to the blind side thereof, and followed by relative adjustment to the anchor mode, and b) also forms a permanent part of the fastener device and to which fixtures can be fastened.

For the sake of example only, the drawing shows use of the blind fastener device to attach devices which are to be suspended from a ceiling, and evidently the blind fastener device can be used to attach other fixings to holes in other types of building component, such as a vertical partition wall.

The channel shaped anchor 11 has a first recess 20 in which the head (nut 13) of the rod 12 is received, in the insertion mode, and with the anchor 11 extending generally parallel to the axis of the rod 12. A second recess 21 receives the head after relative adjustment to the anchor mode.

By forming the anchor 11 as a channel shaped member, the rod 12 can be received within this channel, in the insertion mode, and the first and second recesses 20 and 21 can readily be formed in the wall of the channel shaped member.

The first recess 20 receives the head (nut 13) and prevents relative axial movement between the anchor 11 and the rod 12 in the insertion mode (to facilitate introduction and passage of the anchor through the hole), and the second recess 21 prevents movement in a relative perpendicular direction between the head 13 and the anchor 11 so that a device can be clamped to the fastener device.

A cam or guide surface 22 is formed in the wall of the channel, and runs between the first recess and the second recess 21, to guide relative adjustment movement between the insertion mode and the anchor mode.

The adjustment movement is a type of combined pivoting and rocking movement, and a pivot point is provided in the channel shaped member 11 to assist the pivoting / rocking movement of the rod 12. The pivot point is provided by inward deformation of the side walls of the channel shaped anchor 11 to form a pair of inwardly deformed pips 23.

## Claims

1. A blind fastener device (10) which comprises an anchor (11) and an elongate coupling member (12) which is adjustably connected to said anchor (11), said device being capable of being presented to an access side (14a) of a through-hole (16) in a building component (14) and for the anchor (11) to be moved through the hole (16) to a blind side (14b) thereof and for the device (10) to be adjusted when the anchor (11) has reached the blind side so that the anchor takes-up an anchoring position, in which:
(1) the anchor (11) and the coupling member (12) are relatively adjustable between an insertion mode in which the anchor presents a profile of minimum lateral extent relative to the coupling member so that the coupling member can present the anchor to the through-hole (16) from the access side (14a) thereof and can be used to pass the anchor through the hole to the blind side (14b) thereof, and an anchor position in which the anchor (11) takes-up a profile of maximum lateral extent relative to the coupling member (12) so as to overlie the entrance to the through-hole (16) at the blind side (14b);
(2) the coupling member (12) is held captive by the anchor (11), when they are relatively adjusted to the anchor position, so as to extend substantially perpendicular to the anchor and to form a fixing element to which a device can be fastened, wherein the coupling member comprises an elongated rod or bar (12) having a threaded portion (19) to which a device can be fastened, and a head or nut (13) to hold the rod or bar (12) captive with the anchor (11);
(3) the anchor (11) comprises a generally channel shaped member in which the elongate coupling member (12) can be received in the insertion mode of the fastener device in which the anchor (11) has a first recess (20) in which said head (13) is received in the insertion mode and with the anchor (11) extending generally parallel to the axis of the rod, and a second recess (21) which receives said head (13) after relative adjustment of the anchor (11) to the anchor mode, in which said first and second recesses (20, 21) are formed in the side walls of the channel shaped member (11);
(4) the adjustment movement of said anchor (11) and said coupling member (12) between the insertion mode and the anchor mode comprises a combined pivoting and rocking movement;
characterised in that :
(5) a pivot point (23) is provided in the side walls of the channel shaped member (11) to assist the combined pivoting / rocking movement and said pivot point is formed by a pair of opposed inwardly deformed pips (23) disposed adjacent the second recess.

2. A fastener device according to Claim 1, in which said first recess (20) is arranged to receive said head (13) and to prevent relative axial movement between the anchor (11) and the rod (12) in the insertion mode, and the second recess (21) is arranged to prevent relative perpendicular movement between said head (13) and the anchor (11), in the anchor mode, so that a device can be clamped to the fastener device.

3. A fastener device according to any preceding claim, in which a cam or guide surface (22) is formed in the wall of the channel shaped member (11) and runs between the first and second recesses (20, 21) to guide relative adjustment movement between the insertion mode and the anchor mode.

## Patentansprüche

1. Blindbefestigungsvorrichtung (10), die einen Anker (11) und ein langgestrecktes Verbindungsglied (12) umfasst, das einstellbar mit dem Anker (11) verbunden ist, wobei die Vorrichtung geeignet ist, an einer zugänglichen Seite (14a) einer Durchgangsbohrung (16) in einer Gebäudekomponente (14) eingeführt zu werden und der Anker (11) durch die Bohrung (16) zu einer unzugänglichen Seite (14b) davon bewegt werden kann und die Vorrichtung (10) so eingestellt werden kann, dass der Anker eine Verankerungsposition einnimmt, wenn der Anker (11) die unzugängliche Seite erreicht hat, wobei:
1. der Anker (11) und das Verbindungsglied (12) relativ einstellbar sind zwischen einer Einführstellung, in der der Anker ein Profil von minimaler lateraler Ausdehnung relativ zu dem Verbindungslied darstellt, so dass das Verbindungsglied den Anker in die Durchgangsbohrung (16) von deren zugänglicher Seite (14a) her einführen kann und benutzt werden kann, um den Anker durch die Bohrung zu deren unzugänglicher Seite (14b) zu befördern, und einer Ankerstellung, bei der der Anker (11) ein Profil von maximaler lateraler Ausdehnung relativ zu dem Verbindungsglied (12) einnimmt, so dass er den Eingang der Durchgangsbohrung (16) an der unzugänglichen Seite (14b) überdeckt;
2. das Verbindungsglied (12) von dem Anker (11) gefesselt gehalten wird, wenn sie in der Ankerposition relativ eingestellt sind, so dass es sich im wesentlichen rechtwinklig zu dem Anker erstreckt und ein Befestigungselement bildet, an dem eine Vorrichtung befestigt werden kann, wobei das Verbindungsglied einen langgestreckten Stab oder Stange (12) mit einem Gewindeabschnitt (19) umfasst, an dem eine Vorrichtung befestigt werden kann, und einen Kopf oder eine Mutter (13), um den Stab oder die Stange (12) gefesselt an dem Anker (11) zu halten;
3. der Anker ein im wesentlichen kanalförmig gestaltetes Glied umfasst, in das das langgestreckte Verbindungsglied (12) in der Einführstellung der Befestigungsvorrichtung aufgenommen werden kann, wobei der Anker (11) eine erste Ausnehmung (20) aufweist, in die der Kopf (13) in der Einführstellung aufgenommen werden kann und wobei der Anker (11) sich im wesentlichen parallel zu der Achse des Stabes erstreckt und wobei eine zweite Ausnehmung (21) vorgesehen ist, die den Kopf (13) nach der relativen Einstellung des Ankers (11) in die Ankerstellung aufnimmt, wobei die erste und die zweite Ausnehmung (20, 21) in den Seitenwänden des kanalförmigen Gliedes (11) eingeformt sind;
4. die Einstellbewegung des Ankers (11) und des Verbindungsgliedes (12) zwischen der Einführstellung und der Ankerstellung eine kombinierte Schwenkbewegung und Hin- und Herbewegung umfasst; **dadurch gekennzeichnet**, dass:
5. ein Schwenkpunkt (23) an den Seitenwänden des kanalförmig gestalteten Gliedes (11) vorgesehen ist, um die kombinierte Schwenk-/Hin- und Herbewegung zu unterstützen und der Schwenkpunkt von einem Paar von sich gegenüberliegenden, nach innen deformierten Höckern (23) gebildet ist, die der zweiten Ausnehmung benachbart angeordnet sind.

2. Befestigungsvorrichtung nach Anspruch 1, wobei die erste Ausnehmung (20) eingerichtet ist, den Kopf (13) aufzunehmen und eine relative Axialbewegung zwischen dem Anker (11) und dem Stab (12) in der Einführstellung zu verhindern, und die zweite Ausnehmung (21) eingerichtet ist, relative senkrechte Bewegung zwischen dem Kopf (13) und dem Anker (11) in der Ankerstellung zu verhindern, so dass eine Vorrichtung an der Befestigungsvorrichtung befestigt werden kann.

3. Befestigungsvorrichtung nach einem der vorhergehenden Ansprüche, wobei eine Nocken- oder Führungsfläche (22) in der Wand des kanalförmig gestalteten Gliedes (11) ausgebildet ist und zwischen der ersten und der zweiten Ausnehmung (20, 21) verläuft, um die relative Einstellbewegung zwischen der Einführstellung und der Ankerstellung zu führen.

## Revendications

1. Dispositif de fixation en aveugle (10) qui comprend un élément d'ancrage (11) et un élément de couplage allongé (12) qui est raccordé de manière ajustable audit élément d'ancrage (11), ledit dispositif étant à même d'être présenté sur un côté d'accès (14a) d'un trou traversant (16) ménagé dans un composant de construction (14), l'élément d'ancrage (11) pouvant être déplacé à travers le trou (16) vers son côté aveugle (14b) et le dispositif (10) pouvant être ajusté lorsque l'élément d'ancrage (11) a atteint le côté aveugle de telle sorte que l'élément d'ancrage adopte une position d'ancrage, dispositif dans lequel :
(1) l'élément d'ancrage (11) et l'élément de couplage (12) sont ajustables l'un par rapport à l'autre entre un mode d'insertion, dans lequel l'élément d'ancrage présente un profil d'extension latérale minimale par rapport à l'élément de couplage de telle manière que l'élément de couplage puisse présenter l'élément d'ancrage au trou traversant (16) par son côté d'accès (14a) et puisse être utilisé pour faire passer l'élément d'ancrage à travers le trou jusqu'à son côté aveugle (14b), et une position d'ancrage dans laquelle l'élément d'ancrage (11) adopte un profil d'extension latérale maximale par rapport à l'élément de couplage (12) de manière à chevaucher l'entrée dans le trou traversant (16) sur le côté aveugle (14b),
(2) l'élément de couplage (12) est maintenu captif par l'élément d'ancrage (11), lorsqu'ils sont ajustés l'un par rapport à l'autre dans la position d'ancrage, de manière à s'étendre sensiblement perpendiculairement à l'élément d'ancrage et à former un élément de fixation auquel un dispositif peut être fixé, l'élément de couplage comprenant une tige ou une barre allongée (12) ayant une partie filetée (19) à laquelle un dispositif peut être fixé, et une tête ou un écrou (13) pour maintenir la tige ou la barre (12) captive avec l'élément d'ancrage (11),
(3) l'élément d'ancrage (11) comprend un élément généralement en forme de U dans lequel l'élément de couplage allongé (12) peut être reçu dans le mode d'insertion du dispositif de fixation dans lequel l'élément d'ancrage (11) a un premier évidement (20) dans lequel ladite tête (13) est reçue dans le mode d'insertion, l'élément d'ancrage (11) s'étendant de manière générale parallèlement à l'axe de la tige, et un second évidement (21) qui reçoit ladite tête (13) après ajustement relatif de l'élément d'ancrage (11) dans le mode d'ancrage, lesdits premier et deuxième évidements (20, 21) étant formés dans les parois latérales de l'élément en forme de U (11),
(4) le mouvement d'ajustement dudit élément d'ancrage (11) et dudit élément de couplage (12) entre le mode d'insertion et le mode d'ancrage comprend un mouvement combiné de pivotement et de basculement,
caractérisé en ce que :
(5) un pivot (23) est situé dans les parois latérales de l'élément en forme de U (11) pour favoriser le mouvement combiné de pivotement et de basculement et ledit pivot est formé par une paire d'ergots opposés (23) déformés vers l'intérieur et disposés au voisinage du second évidement.

2. Dispositif de fixation selon la revendication 1, dans lequel ledit premier évidement (20) est agencé pour recevoir ladite tête (13) et pour empêcher un mouvement axial relatif entre l'élément d'ancrage (11) et la tige (12) dans le mode d'insertion, et le second évidement (21) est agencé pour empêcher un mouvement relatif perpendiculaire entre ladite tête (13) et l'élément d'ancrage (11) dans le mode d'ancrage, de telle sorte qu'un dispositif puisse être bloqué sur le dispositif de fixation.

3. Dispositif de fixation selon l'une quelconque des revendications précédentes, dans lequel une surface de came ou surface de guidage (22) est formée dans la paroi de l'élément en U et s'étend entre le premier et le second évidements (20, 21) pour guider un mouvement d'ajustement relatif entre le mode d'insertion et le mode d'ancrage.
